(19) Europäisches Patentamt
European Patent Office
Office européen des brevets

(11) Veröffentlichungsnummer: **0 005 304**
**B1**

# (12) EUROPÄISCHE PATENTSCHRIFT

(45) Veröffentlichungstag der Patentschrift: **02.09.81**

(51) Int. Cl.³: **B 60 T 13/68**, B 60 T 8/18, B 60 T 13/38

(21) Anmeldenummer: **79200216.4**

(22) Anmeldetag: **04.05.79**

## (54) Pneumatikfahrzeugbremseinrichtung.

(30) Priorität: **09.05.78 CH 5040/78**

(43) Veröffentlichungstag der Anmeldung: **14.11.79 Patentblatt 79/23**

(45) Bekanntmachung des Hinweises auf die Patenterteilung: **02.09.81 Patentblatt 81/35**

(84) Benannte Vertragsstaaten: **AT BE CH DE FR GB IT NL SE**

(56) Entgegenhaltungen:
**DE-A-2 333 637**
**DE-A-2 068 664**
**DE-B-1 100 671**

(73) Patentinhaber: **Werkzeugmaschinenfabrik Oerlikon-Bührle AG, Birchstrasse 155, CH-8050 Zürich (CH)**

(72) Erfinder: **Deutsch, Heinz, Ing. HTL, Kreuzwiesen 17, CH-8051 Zürich (CH)**
Erfinder: **Müller, Walter, Ing. HTL, Rebenweg 10, CH-8303 Bassersdorf (CH)**

(74) Vertreter: **Hunziker, Kurt et al, c/o Werkzeugmaschinenfabrik Oerlikon-Bührle AG Birchstrasse 155, CH-8050 Zürich (CH)**

**EP 0 005 304 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

# Pneumatikfahrzeugbremseinrichtung

Die Erfindung bezieht sich auf eine Pneumatikfahrzeugbremseinrichtung mit einem lastabhängigen Druckregler, einem umschaltbaren Wegeventil und wahlweise einem Steuerventil mit einer oder mehreren Stufen, wobei Druckkammern des wahlweise vorgesehenen Steuerventils oder eines Bremszylinders durch Betätigung des Wegeventils gefüllt oder entleert werden können.

Fahrzeugbremseinrichtungen dieser Art werden vorzugsweise als Betriebsbremsen für Eisenbahnzüge verwendet. Mit einem mehrstufigen Steuerventil versehen, ermöglichen sie die Wahl verschiedener Verzögerungsstufen.

Aus dem Schweizer Patent No. 588 370 ist eine solche Einrichtung für eine elektropneumatisch betätigbare mehrstufige Bremse bekannt. Bei dieser Einrichtung sind umschaltbare Magnetventile einerseits an eine Speiseleitung und anderseits an ein Steuerventil und einen lastabhängigen Druckregler angeschlossen. Zum Absenken des Drucks in den Druckkammern des Steuerventils werden diese, durch Umschalten des Magnetventils, mit dem Druckregler verbunden. Die betreffende Kammer des Druckreglers steht unter einem tieferen und geregelten Druck und kann bei Druckanstieg die Luft an die Atmosphäre abgeben.

Der Nachteil dieser Lösung besteht darin, daß bei einer Störung im Druckregler die Druckkammern des Steuerventils zwar durch die Magnetventile nach wie vor mit dem Druckregler verbunden werden können, daß aber der Druck durch den Druckregler nicht mehr abgebaut werden kann. Dieses Versagen des Druckreglers führt entsprechend zum Versagen der ganzen Bremseinrichtung.

Der Erfindung, wie sie in den Ansprüchen gekennzeichnet ist, liegt die Aufgabe zugrunde, eine Pneumatikfahrzeugbremseinrichtung zu schaffen, dessen Funktionsfähigkeit auch dann erhalten bleibt, wenn eine Undichtheit an einer Laststeuerleitung oder an den Dichtungen von Kolben des lastabhängigen Druckreglers auftritt oder wenn unter bestimmten Voraussetzungen die Kolben des Druckreglers nicht mehr bewegbar sind. Erfindungsgemäß wird dies erreicht durch die Anordnung eines Doppelrückschlagventils zwischen Wegeventil einerseits und Druckregler und Druckkammer anderseits, wobei das Wegeventil in seiner einen Schaltstellung das Doppelrückschlagventil mit einem Ausgang verbindet.

Die durch die Erfindung erreichten Vorteile sind im wesentlichen darin zu sehen, daß eine Bremsung auch bei Auftreten der oben erwähnten Defekte noch möglich ist.

Im folgenden werden an Hand der beigelegten Figuren Ausführungsbeispiele der Erfindung näher beschrieben. Es zeigt

Fig. 1 eine schematische Darstellung einer Fahrzeugbremseinrichtung mit einem mehrstufigen Steuerventil,

Fig. 2 eine schematische Darstellung einer Fahrzeugbremseinrichtung ohne Steuerventil.

Die Fahrzeugbremseinrichtung gemäß Fig. 1 besitzt ein Steuerventil 1, drei Wege- oder Magnetventile 2, 3 und 4 und einen lastabhängigen Druckregler 5. Die Bremseinrichtung umfaßt ferner eine Speiseleitung 6, eine Bremsleitung 7 und eine Laststeuerleitung 8. An die Bremsleitung 7 ist ein Bremszylinder 9 angeschlossen. Im Bremszylinder 9, in diesem Beispiel als Federspeicher-Bremszylinder ausgebildet, befindet sich eine Speicherfeder 10, welche bei entlüfteter Druckkammer 9a des Bremszylinders 9 die volle Bremskraft erzeugt. Diese Speicherfeder 10 stützt sich einerseits am Boden des Bremszylinders 9 und anderseits am Bremskolben 11 ab. Die Speiseleitung 6 ist über einen Druckbegrenzer 12 an eine nicht dargestellte Druckluftquelle angeschlossen. Die Laststeuerleitung 8 ist entweder an eine nicht dargestellte Luftfeder oder ein nicht dargestelltes Wiegeventil angeschlossen, welche einen lastabhängigen Druck erzeugen, der direkt proportional zur Fahrzeugbelastung ist.

Das Steuerventil 1 der Bremseinrichtung weist drei Steuerkolben 13, 14 und 15 auf. Wie aus Fig. 1 ersichtlich ist, sind diese drei Kolben verschieden groß. Der mittlere Kolben 14 ist doppelt so groß als der rechte Kolben 13 und halb so groß als der linke Kolben 15, oder mit anderen Worten, wenn die Summe der drei Kolbenflächen mit F bezeichnet wird, so ist die Fläche des Kolbens 13 1/7 F, die Fläche des Kolbens 14 2/7 F und die Fläche des Kolbens 15 4/7 F. Diese drei Kolben 13, 14 und 15 sind an einer Kolbenstange 16 befestigt, die sich auf einem Ventilkörper 17 abstützt. Dieser Ventilkörper 17 hat eine Bohrung 17a und wird durch eine Ventilfeder 18 gegen den ortsfesten Ventilsitz 19 des Ventilgehäuses 20 gedrückt und trennt in dieser Stellung zwei Ventilkammern 21 und 22 voneinander ab. Die Kammer 21 ist über die Bremsleitung 7 an den Bremszylinder 9 angeschlossen und die Kammer 22 ist über Speiseleitung 6 und über den Druckbegrenzer 12 an die nicht dargestellte Druckluftquelle angeschlossen. Jeder der drei Steuerkolben 13, 14 und 15 befindet sich zwischen je einer Steuerkammer 24, 26, 28 und je einer Druckkammer 23, 25, 27. Die Druckkammer 23 des Steuerkolbens 13 ist an das erste Doppelrückschlagventil 30, die Druckkammer 25 des mittleren Steuerkolbens 14 ist an das zweite Doppelrückschlagventil 31 und die Druckkammer 27 des Steuerkolbens 15 ist an das dritte Doppelrückschlagventil 32 angeschlossen. Die Steuerkammern 24, 26 und 28 sind mit der Atmosphäre verbunden. Zwischen der Ventilkammer 21 und einer Steuerkammer 29, die ebenfalls mit der Atmosphäre verbunden ist, befindet sich noch ein Steuerkolben 33, der ebenfalls an der Kolbenstange 16 befestigt ist.

Jedes der drei Magnetventile 2, 3 und 4 weist einen Ventilteller 34 bzw. 35 bzw. 36 auf. Jeder dieser Ventilteller 34, 35, 36 trennt eine obere Ventilkammer 37 bzw. 38 bzw. 39 von einer unteren Ventilkammer 40 bzw. 41 bzw. 42 ab. Die oberen drei Ventilkammern 37, 38 und 39 sind über Speiseleitung 6 und den Druckbegrenzer 12 an die nicht dargestellte Druckluftquelle angeschlossen. Die unteren drei Ventilkammern 40, 41 und 42 sind über Leitungen 43 an die Doppelrückschlagventile 30, 31, 32 angeschlossen. Die drei Magnetventile 2, 3 und 4 weisen je einen Anker 44 auf, der in üblicher Weise eine elektrische Betätigung der Ventilteller 34, 35 und 36 ermöglicht. Werden die Magnetventile 2, 3 und 4 erregt, so werden die Ventilteller 34, 35 und 36 entgegen der Kraft von Federn 45 angehoben und befinden sich in der gezeichneten Stellung. In dieser Stellung kann Druckluft aus der Speiseleitung 6 über die Doppelrückschlagventile 30, 31, 32 in die Druckkammern 23, 25 und 27 des Steuerventils 1 gelangen. Sind die Magnetventile 2, 3 und 4 nicht erregt und die Ventilteller 34, 35 und 36 nicht angehoben, dann kann Druckluft aus dem Steuerventil 1 über die Doppelrückschlagventile 30, 31, 32, deren Klappen 46 sich in der gezeichneten Stellung befinden, die Leitungen 43 und die Ausgangsbohrungen 47 in den Ankern 44 in die Atmosphäre gelangen.

Der Druckregler 5 weist zwei Reglerkolben 48 und 49 auf. Der obere Reglerkolben 48 trennt eine Reglerkammer 50 von einer mit der Atmosphäre verbundenen Kammer 51 ab. Der untere Reglerkolben 49 trennt eine obere, mit der Laststeuerleitung 8 verbundene Kammer 52 von einer mit der Atmosphäre verbundenen Kammer 53 ab. Der untere Reglerkolben 49 ist durch eine Feder 54 belastet, welche den Reglerkolben 49 um so stärker anhebt, je kleiner die Fahrzeugbelastung ist und je kleiner der Druck in der Laststeuerleitung 8 und in der Kammer 52 ist. Die beiden Reglerkolben 48 und 49 sind über eine Kolbenstange 55 miteinander verbunden, welche zur Betätigung eines Ventilkörpers 56 dient, der mit einer Bohrung 56a versehen ist. Der Ventilkörper 56 trennt in der gezeigten Stellung die erwähnte Reglerkammer 50 von einer Ventilkammer 57 ab, die an die Speiseleitung 6 angeschlossen ist. Eine Ventilfeder 58 hat das Bestreben, den Ventilkörper 56 auf einen Ventilsitz 59 des Ventilgehäuses 60 zu drücken. Eine Leitung 61 verbindet die Reglerkammer 50 mit den Doppelrückschlagventilen 30, 31, 32.

In einer weiteren möglichen Ausführung soll die Feder 10 im Bremszylinder 9 so angeordnet sein, daß sie bei entlüfteter Druckkammer 9a, statt die volle Bremskraft zu erzeugen, die Bremse löst. Dabei müssen die Steuerkammern 24, 26 und 28 des Steuerventils 1 mit den Doppelrückschlagventilen 30, 31, 32 und die Druckkammern 23, 25, 27 mit der Atmosphäre verbunden werden, d. h. die Steuerkammern werden zu Druckkammern und umgekehrt. Die Kammer 29 muß an die Speiseleitung 6 angeschlossen werden.

Bei der Bremseinrichtung gemäß Fig. 2 sind entsprechende Teile mit den selben Bezugsziffern wie in Fig. 1 bezeichnet. Dieses zweite Ausführungsbeispiel der Bremseinrichtung unterscheidet sich vom ersten Ausführungsbeispiel durch folgende Merkmale.

Es ist kein Steuerventil vorgesehen. Deshalb ist der Bremszylinder 9, der in diesem Beispiel als Federspeicherbremszylinder ausgebildet ist, direkt mit dem Ausgang des Doppelrückschlagventils 30 verbunden.

Nachfolgend ist die Wirkungsweise der Fahrzeugbremseinrichtung mit einem mehrstufigen Steuerventil, gemäß Fig. 1, beschrieben.

1) Zum vollständigen Lösen der Bremse muß der Strom für die Magnetventile 2, 3 und 4 eingeschaltet werden. Dadurch gelangt Druckluft aus der Speiseleitung 6 in die Druckkammern 23, 25, 27 des Steuerventils 1 und der Ventilkörper 17 wird vom Ventilsitz 19 abgehoben, dadurch gelangt Druckluft aus der Ventilkammer 22 in die Druckkammer 9a des Bremszylinders 9 und verschiebt den Kolben 11 entgegen der Kraft der Speicherfeder 10 in seine Lösestellung.

2) Für eine Vollbremsung muß der Strom für die Magnetventile 2, 3 und 4 ausgeschaltet werden. Dadurch werden die Ventilteller 34, 35, 36 durch die Federn 45 auf ihren Sitz gedrückt und der Anker 44 fällt in seine untere Endstellung und löst sich von den Ventiltellern 34, 35, 36. Dadurch werden die unteren Ventilkammern 40, 41, 42 über die Ausgangsbohrungen 47 mit der Atmosphäre verbunden und die Druckkammern 23, 25, 27 des Steuerventils 1 entleeren sich, wobei der Druck fällt. Da der Druck in der Ventilkammer 21 zunächst noch erhalten bleibt, werden die Kolben 13, 14, 15 über die Kolbenstange 16 in Fig. 1 nach rechts bewegt. Dadurch wird die Bohrung 17a im Ventilkörper 17 freigelegt und die Ventilkammer 21 entleert sich, wodurch der Druck auch in der Druckkammer 9a des Bremszylinders 9 fällt. Die Feder 10 drückt den Bremskolben 11 in Fig. 1 nach links, wodurch die Bremsung eingeleitet ist.
Wie weit der Druck in den Druckkammern 23, 25, 27 und 21 und somit im Bremszylinder 9 fällt, hängt von der Beladung des Fahrzeuges ab und zwar wie folgt:

2a) Bei vollständig beladenem Fahrzeug herrscht in der Laststeuerleitung 8 ein maximaler Druck, der ausreicht, den Reglerkolben 49 entgegen der Kraft der Feder 54 vollständig nach unten zu drücken. Der Ventilkörper 56 liegt dann auf dem Sitz 59 auf und das obere Ende der Kolbenstange 55 berührt den Ventilkörper 56 nicht mehr. Die Luft aus der Kammer 50 kann somit durch die Bohrung 56a im Ventilkörper 56 in die Atmosphäre entweichen. Somit herrscht in der Leitung 61 Atmosphärendruck und die Klappe 46 in den Doppelrückschlagventilen 30, 31, 32 bleibt in der in Fig. 1 gezeichneten Stellung.

2b) Bei vollständig entladenem Fahrzeug herrscht in der Laststeuerleitung 8 ein minimaler Druck. Die Feder 54 ist daher in der Lage, den Reglerkolben 49 nach oben zu drücken. Der Ventilkörper 56 wird daher vom Ventilsitz 59 abgehoben. In die Kammer 50 strömt so lange Druckluft aus der Kammer 57, bis der in der Kammer 50 herrschende Druck, der auf den Reglerkolben 48 wirkt, in der Lage ist, den Druckregler 5 in eine Abschlußstellung zu bringen. Das bedeutet, daß die Druckkammern 23, 25, 27 sich nur noch so weit in bereits bekannter Weise über die Doppelrückschlagventile 30, 31, 32 entleeren, bis der Druck in diesen Druckkammern 23, 25, 27 wenig kleiner ist als in der Reglerkammer 50 des Druckreglers 5 und entsprechend in Leitung 61. Der leicht höhere Druck in Leitung 61 bewirkt in den Doppelrückschlagventilen 30, 31, 32, daß die Klappe 46 nun den Eingang zu Leitung 43 schließt und denjenigen zu Leitung 61 öffnet. Dadurch können sich die Druckkammern 23, 25, 27 im Steuerventil 1 trotz unter Atmosphärendruck stehender Leitungen 43 nicht weiter entleeren und der Druck darin entspricht demjenigen in der Reglerkammer 50 des Druckreglers 5. Das bedeutet, daß der Druck in der Ventilkammer 21 sowie im Bremszylinder 9 nicht auf Atmosphärendruck absinken kann und somit durch die Feder 10 nur eine reduzierte Bremskraft ausgeübt wird.

3) Bei teilweise beladenem Fahrzeug ist die Bremskraft immer proportional zur Belastung des Fahrzeuges.
Wird nur das Magnetventil 2 eingeschaltet, so erreicht die Bremskraft nur 1/7 der Vollbremsung. Es sind sieben Bremsstufen möglich, nämlich

| | |
|---|---|
| Ventil 2 | Stufe 1 |
| Ventil 3 | Stufe 2 |
| Ventil 2+3 | Stufe 3 |
| Ventil 4 | Stufe 4 |
| Ventil 4+2 | Stufe 5 |
| Ventil 4+3 | Stufe 6 |
| Ventil 4+3+2 | Stufe 7 |

Um das Anbremsen zu erleichtern, kann noch ein viertes, hier nicht näher dargestelltes, Magnetventil vorgesehen werden, das an eine vierte, ebenfalls nicht dargestellte Druckkammer, allerdings direkt, angeschlossen ist. Wird dieses Magnetventil eingeschaltet, so sinkt der Druck in dieser vierten Druckkammer des Steuerventils 1 auf Atmosphärendruck ab, wodurch unabhängig von der Fahrzeugbelastung und von der Bremsstufe Anbremskraft entsteht, da entsprechend der Absenkung des Drucks in der Druckkammer auch der Druck im Bremszylinder 9 absinkt und die Speicherfeder 10 eine gewisse Bremskraft erzeugen kann. Dieses Anbremsen ist besonders bei leeren Fahrzeugen niedriger Bremsstufe und großen Gestängesteller-Gegenkräften von Bedeutung.

Die Wirkungsweise einer Fahrzeugbremseinrichtung ohne mehrstufiges Steuerventil, wie in Fig. 2 dargestellt, ergibt sich folgendermaßen:

4) Zum vollständigen Lösen der Bremse muß der Strom für das Magnetventil 2 eingeschaltet werden. Dadurch gelangt Druckluft aus der Speiseleitung 6 in die Druckkammer 9a des Bremszylinders 9 und verschiebt den Kolben 11 entgegen der Kraft der Speicherfeder 10 in seine Lösestellung.

5) Für eine Vollbremsung wird der Strom für das Magnetventil 2 abgeschaltet. Dadurch wird der Ventilteller 34 durch die Feder 45 auf seinen Sitz gedrückt, und der Anker 44 fällt in seine untere Endstellung und löst sich vom Ventilteller 34. Dadurch wird die Druckkammer 9a über die Ausgangsbohrung 47 mit der Atmosphäre verbunden. Die Druckkammer 9a entleert sich und der Druck darin fällt. Der Kolben 11 beginnt sich unter dem Druck der Speicherfeder 10 in Fig. 2 nach links zu verschieben, wodurch die Bremsung eingeleitet ist.
Wie weit der Druck in der Druckkammer 9a fällt, hängt von der Beladung des Fahrzeuges ab und zwar wie folgt:

5a) Bei vollständig beladenem Fahrzeug herrscht in der Laststeuerleitung 8 ein maximaler Druck, der ausreicht, den Reglerkolben 49 entgegen der Kraft der Feder 54 vollständig nach unten zu drücken. Der Ventilkörper 56 liegt dann auf dem Sitz 59 auf, und das obere Ende der Kolbenstange 55 berührt den Ventilkörper 56 nicht mehr. Die Luft aus der Kammer 50 kann somit durch die Bohrung im Ventilkörper 56 in die Atmosphäre entweichen. Somit herrscht in der Leitung 61 Atmosphärendruck, und die Klappe 46 im Doppelrückschlagventil 30 bleibt in der in Fig. 2 gezeigten Stellung.

5b) Bei vollständig entladenem Fahrzeug herrscht in der Laststeuerleitung 8 ein minimaler Druck. Die Feder 54 ist daher in der Lage, den Reglerkolben 49 nach oben zu drücken. Der Ventilkörper 56 wird daher vom Ventilsitz 59 abgehoben. In die Kammer 50 strömt so lange Druckluft aus der Kammer 57, bis der in der Kammer 50 herrschende Druck, der auf den Reglerkolben 48 wirkt, in der Lage ist, den Reglerkolben 48 so weit nach unten zu drücken, daß der Ventilsitz 59 durch den Ventilkörper 56 wieder geschlossen wird. Das bedeutet, daß sich die Druckkammer 9a nur noch so weit entleeren kann, daß der Druck darin den Druck in der Reglerkammer 50 nur wenig unterschreitet. Der wenig höhere Druck in der Leitung 61 bewirkt im Doppelrückschlagventil 30, daß die Klappe 46 den Eingang zu Leitung 43 schließt und denjenigen zu Leitung 61 öffnet.

Das bedeutet, daß der Druck im Bremszylinder 9 nicht auf Atmosphärendruck absinken kann und somit durch die Feder 10 nur eine reduzierte Bremskraft ausgeübt wird.

Mit dieser Fahrzeugbremseinrichtung ist nur eine Bremsstufe möglich, also beispielsweise eine Vollbremsung.

6) Tritt in der Laststeuerleitung 8 eine Undichtheit auf oder wird beim Reglerkolben 49 die Dichtung zur Zylinderwand undicht, so stellt sich in der Kammer 52 Umgebungsdruck ein. Dadurch wird der Reglerkolben 49 mit der Kolbenstange 55 nach oben verschoben, und der Ventilkörper 56 verbindet die Ventilkammer 57 mit der Reglerkammer 50. Dabei kann Luft aus der Speiseleitung 6 in die Reglerkammer 50 strömen. Dadurch wird der Reglerkolben 48 wieder nach unten gedrückt, und die Zufuhr von Luft aus der Speiseleitung 6 unterbrochen. Werden nun die Magnetventile 2, 3 und 4 für eine Vollbremsung betätigt, so kann die Luft aus den Druckkammern 23, 25 und 27 über die Leitungen 43 und die Ausgangsbohrungen 47 entweichen. Dies solange bis der Druck in den Leitungen 43 denjenigen Druck in der Reglerkammer 50 knapp unterschreitet. Dann begeben sich die Klappen 46 der Doppelrückschlagventile 30, 31 und 32 in die Stellung, in der die Leitung 61 mit den Druckkammern 23, 25 und 27 verbunden ist. Damit stabilisiert sich die Bremskraft auf einem Niveau, der dem Druck in der Reglerkammer 50 entspricht. Dies kann mindestens eine Vollbremsung für ein unbeladenes Fahrzeug ergeben. Beim Undichtwerden des Reglerkolbens 48 stellt sich in der Reglerkammer 50 Umgebungsdruck ein. Somit ist auch eine Vollbremsung für ein vollbeladenes Fahrzeug möglich.

Es ist auch ein Verklemmen des Reglerkolbens 48 denkbar, nachdem sich in der Reglerkammer 50 ein Druck aufgebaut hat, der der augenblicklichen Beladung des Fahrzeuges entspricht. In diesem Falle senkt sich bei Betätigung der Magnetventile 2, 3 und 4 der Druck in den Druckkammern 23, 25 und 27 bis auf das Niveau des Druckes in der Reglerkammer 50 ab. Somit ist auch dann eine einmalige Bremsung, die der augenblicklichen Beladung des Fahrzeuges entspricht, möglich.

Daraus geht hervor, daß unter bestimmten Voraussetzungen die Bremsung eines Fahrzeugs bei bestimmten Defanten des Druckreglers 5 möglich ist.

Selbstverständlich ist es möglich, in die Fahrzeug-Bremseinrichtung ein weiteres Wege- oder Magnetventil den, in den beiden Ausführungsbeispielen gezeigten Wege- oder Magnetventilen beispielsweise als Sicherheitsventil vorauszuschalten.

Eine weitere mögliche Ausführungsform besteht darin, den Druckkammern des Steuerventils ein gemeinsames Doppelrückschlagventil und ein Wegeventil zuzuordnen. Allerdings wäre jeder Druckkammer ein weiteres Ventil zwischen Druckkammer und Doppelrückschlagventil zuzuordnen. Alleinige Betätigung des Wegeventils hätte dann eine Vollbremsung zur Folge. Andernfalls müßte zusammen mit dem Wegeventil immer mindestens eines dieser Ventile betätigt werden, um die Verbindung zwischen Druckkammer und Doppelrückschlagventil zu unterbrechen.

## Patentansprüche

1. Pneumatikfahrzeugbremseinrichtung, insbesondere für elektropneumatisch betätigte Bremsen von Schienenfahrzeugen, mit einer Speiseleitung (6), einem umschaltbaren Wegeventil (2, 3, 4), einem lastabhängigen Druckregler (5) und mindestens einer Druckkammer (9a, 23, 25, 27) eines Kolbens (11, 13, 14, 15) zur Betätigung eines Bremsgestänges, wobei das Wegeventil (2, 3, 4) an die Speiseleitung (6) angeschlossen und in der einen Schaltstellung die Speiseleitung (6) mit der Druckkammer (9a, 23, 25, 27) verbindet, dadurch gekennzeichnet, daß ein Doppelrückschlagventil (30, 31, 32) zwischen Wegeventil (2, 3, 4), lastabhängigen Druckregler (5) und Druckkammer (9a, 23, 25, 27) angeordnet ist, von dessen beiden Eingängen der erste mit dem Wegeventil (2, 3, 4) und der zweite mit dem lastabhängigen Druckregler (5) und dessen Ausgang mit der Druckkammer (9a, 23, 25, 27) verbunden ist, daß in der anderen Schaltstellung des Wegeventils (2, 3, 4) das Doppelrückschlagventil (30, 31, 32) zur Druckabsenkung in der Druckkammer (9a, 23, 25, 27) mit einem Ausgang (47) verbunden ist, und daß zum lastabhängigen Beschränken der Bremskraft das Doppelrückschlagventil (30, 31, 32) umschaltet, wenn der Druck am ersten Eingang gegenüber dem lastabhängigen Druck am zweiten Eingang unterschritten wird.

2. Pneumatikfahrzeugbremseinrichtung nach Anspruch 1, dadurch gekennzeichnet, daß je ein Doppelrückschlagventil (30, 31, 32) und je ein Wegeventil (2, 3, 4) jeder Druckkammer (23, 25, 27) eines Steuerventils (1) zugeordnet sind.

## Claims

1. Pneumatic vehicle braking system, especially for electropneumatically actuated brakes of rail vehicles, with a feed line (6), a reversible directional valve (2, 3, 4), a load-dependent pressure regulator (5) and at least one pressure chamber (9a, 23, 25, 27) of a piston (11, 13, 14, 15) for actuating a brake-rod linkage, the directional valve (2, 3, 4) being connected to the feed line (6) and, in one of its switched positions, connnecting the feed line (6) to the pressure chamber (9a, 23, 25, 27), characterised in that there is located between directional valve (2, 3, 4), load-dependent pressure regulator (5) and pressure chamber (9a, 23, 25, 27) a double non-return valve (30, 31, 32), of the two inlets of which the first is connected to the directional valve (2, 3, 4) and the second to the load-dependent pressure regulator (5), and the outlet of which is connected to the pressure chamber (9a, 23, 25, 27), in that, in the other switched position of the directional valve (2, 3, 4), the double non-return valve (30, 31, 32) is connected to an outlet (47) for lowering the pressure in the pressure chamber (9a, 23, 25, 27), and in that, for the load-dependent limitation of the braking force, the double non-return valve (30, 31, 32) is reversed when the load-dependent pressure at the second inlet falls below the pressure at the first inlet.

2. Pneumatic vehicle braking system according to Claim 1, characterised in that one double non-return valve (30, 31, 32) and one directional valve (2, 3, 4) are assigned respectively to each pressure chamber (23, 25, 27) of a control valve (1).

**Revendications**

1. Installation de frein pneumatique de véhicule, notamment de frein à commande électropneumatique de véhicule ferroviaire, comportant une conduite d'alimentation (6), une vanne à plusieurs voies commutables (2, 3, 4), un régulateur de pression dépendant de la charge (5) et au moins une chambre de pression (9a, 23, 25, 27) d'un piston (11, 13, 14, 15) pour commander une tringlerie de frein, la vanne à plusieurs voies (2, 3, 4) étant reliée à la conduite d'alimentation (6) et dans l'une des positions de commutation la vanne relie la conduite d'alimentation (6) aux chambres de pression (9a, 23, 25, 27), installation caractérisée par une vanne d'arrêt double (30, 31, 32) entre la vanne à plusieurs voies (2, 3, 4), le régulateur de pression dépendant de la charge (5) et la chambre de pression (9a, 23, 25, 27), la première des deux entrées étant reliée à la vanne à plusieurs voies (2, 3, 4) et la seconde au régulateur de pression (5) dépendant de la charge, la sortie étant reliée à chambre de pression (9a, 23, 25, 27), et dans l'autre position de commutation de la vanne à plusieurs voies (2, 3, 4), la vanne d'arrêt double (30, 31, 32) étant reliée à la sortie (47) pour abaisser la pression dans la chambre de pression (9a, 23, 25, 27) et en ce que pour limiter la force de freinage dépendant de la charge, la vanne d'arrêt double (30, 31, 32) commute lorsque la pression appliquée à la première entrée est dépassée vers le bas par la pression dépendant de la charge appliquée à la seconde entrée.

2. Installation de frein pneumatique de véhicule selon la revendication 1, caractérisée en ce que chaque fois une vanne d'arrêt double (30, 31, 32) et chaque fois une vanne à plusieurs voies (2, 3, 4) est associée à chaque chambre de pression (23, 25, 27) d'une vanne de commande (1).

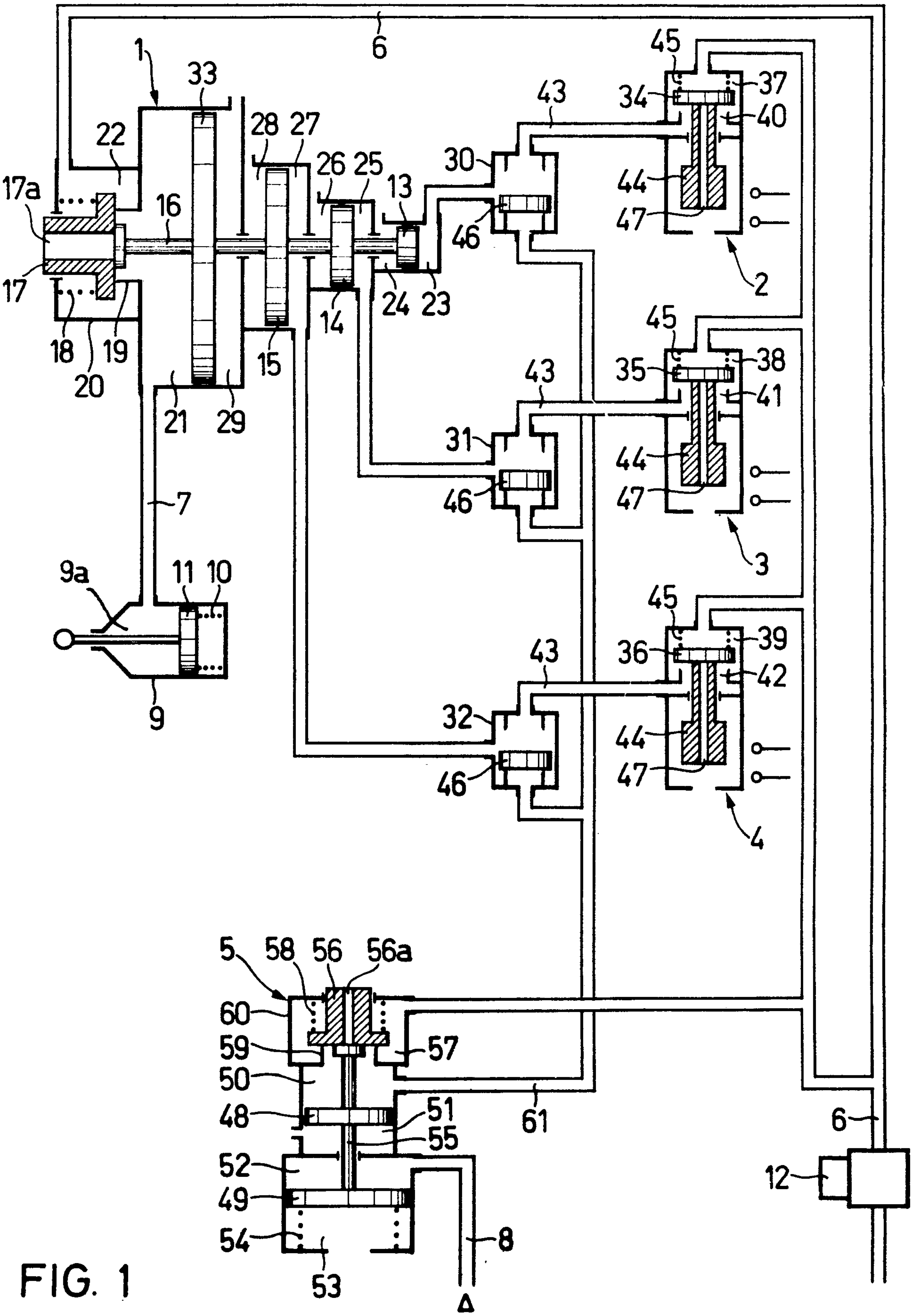

1
2
3
4
5
6
7
8
9
9a
10
11
12
13
14
15
16
17
17a
18
19
20
21
22
23
24
25
26
27
28
29
30
31
32
33
34
35
36
37
38
39
40
41
42
43
44
45
46
47
48
49
50
51
52
53
54
55
56
56a
57
58
59
60
61


FIG. 1

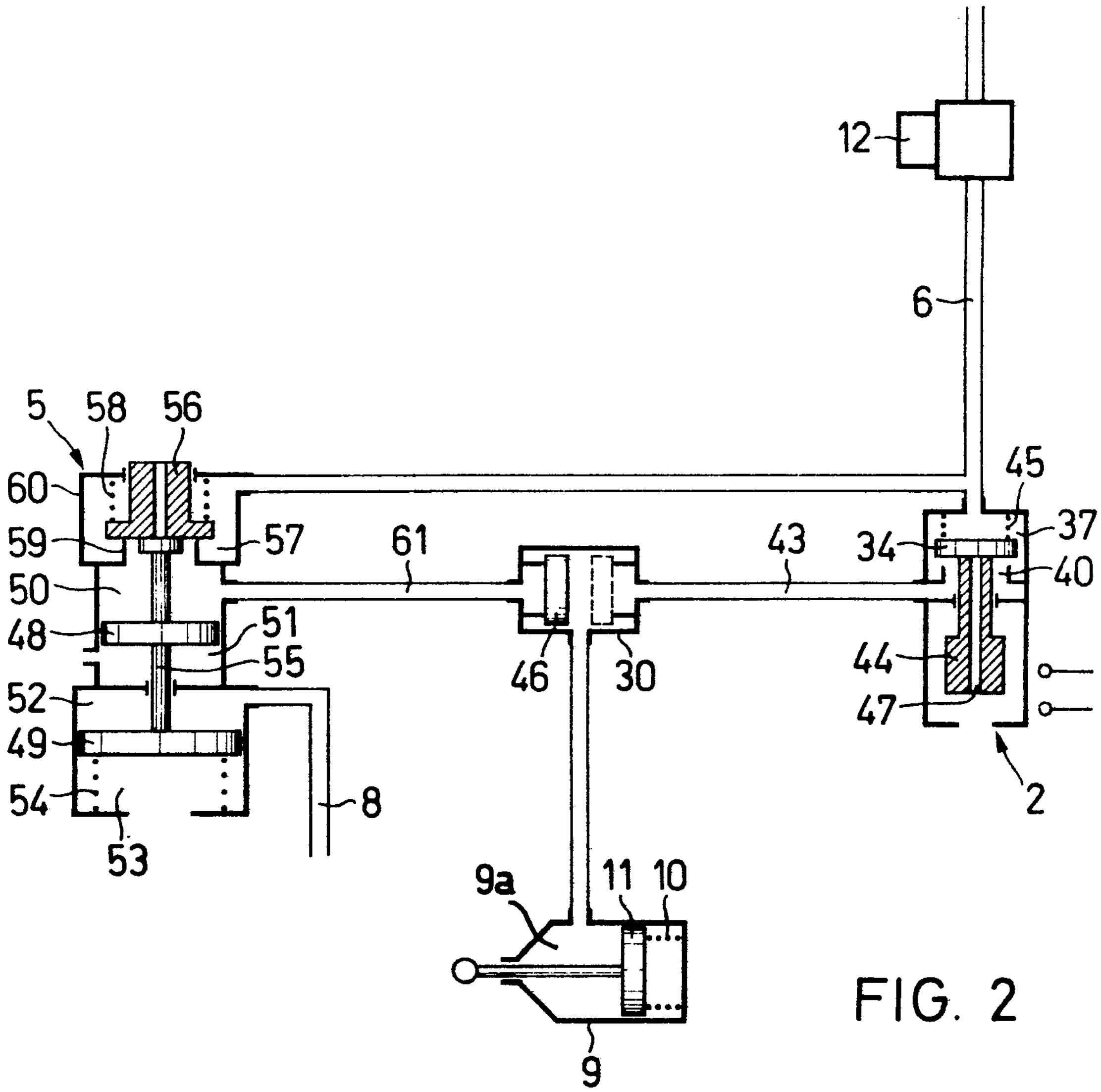

12
6
5
58
56
60
59
57
61
43
45
34
37
40
50
48
51
55
46
30
44
47
52
49
54
53
8
2
9a
11
10
9


FIG. 2